# EUROPÄISCHE PATENTSCHRIFT

(11) **EP 0 884 518 B1**
(45) Veröffentlichungstag und Bekanntmachung des Hinweises auf die Patenterteilung: **07.02.2001**
(21) Anmeldenummer: 98810408.9
(22) Anmeldetag: 06.05.1998
(51) Int. Cl.: F16L 55/033, F16L 3/18

(54) **Einlage für eine Rohrschelle**
Insert for a pipe clamp
Chemise pour collier de serrage

(30) Priorität: 14.06.1997 DE 19725243
(43) Veröffentlichungstag der Anmeldung: 16.12.1998
(73) Patentinhaber: HILTI Aktiengesellschaft, 9494 Schaan (LI)
(72) Erfinder: Hoffmann, Armin, 86899 Landsberg (DE); Mirsberger, Helmut, 81377 München (DE); Dischinger, Jakob, 82272 Eismerszell (DE); Loose, Rainer, 87616 Marktoberdorf (DE)
(74) Vertreter: Wildi, Roland

(56) Entgegenhaltungen:
- EP-A- 0 387 966
- EP-A- 0 742 404
- DE-A- 4 213 893
- GB-A- 592 755

## Beschreibung

Die Erfindung betrifft eine Einlage für eine Rohrschelle aus einem schalldämmenden Material gemäss dem Oberbegriff des Anspruchs 1.

In der Montagetechnik werden bügelförmige Rohrschellen vielfach mit einer Einlage aus Gummi oder einem Elastomer versehen. Die Einlage befindet sich zwischen dem zu haltenden Rohr und der üblicherweise metallischen Rohrschelle und dient der Geräuschdämmung. Dabei sind an die Einlage einander widersprechende Anforderungen gestellt. Einerseits muss sie eine ausreichende Geräuschdämmung gewährleisten und darf sie nicht zu hart sein, dass beispielsweise Trittschall übertragen wird, andererseits darf sie nicht so weich sein, dass sie bei einer Relativbewegung der Rohrschelle und des Rohres von der Rohrschelle gezogen wird und abfallen kann. Bei den derzeit am Markt erhältlichen Rohrschellen mit Schallschutzeinlage tritt häufig das Problem auf, dass während der Rohrmontage durch Schieben oder Drehen des Rohres oder wegen einer thermischen Ausdehnung des montierten Rohres die Schallschutzeinlage von der Rohrschelle gezogen wird und abfallen kann. Die Schallschutzeinlage fest an der Rohrschelle zu montieren, beispielsweise durch Verklemmen, Verkleben oder durch Umspritzen, ist nicht zweckmässig, da die Schallschutzeinlage bei bestimmten Anwendungen, beispielsweise beim Verschweissen der Rohrleitungen, demontierbar sein muss.

Derartige Schallschutzeinlagen für Rohrschellen sind beispielsweise aus der EP-B-0 413 883 bekannt. Das dort beschriebene Strangpressprofil ist auf der dem Rohr zugewandten, mit vorspringenden Wülsten versehenen Seite mit einer reibungsmindernden Beschichtung versehen. Die Seitenteile der Einlage, welche die Ränder der bügelförmigen Rohrschelle umgreifen, bestehen aus einem relativ harten Material und sollen verhindern, dass die Einlage von der Rohrschelle abgezogen wird. Diese bekannte Einlage stellt jedoch nur eine Kompromisslösung dar, die keine besonders guten Dämmeigenschaften aufweist und dennoch bei einer Relativbewegung zwischen dem gelagerten Rohr und der Rohrschelle an den Rändern einrollen kann und von der Rohrschelle abgezogen werden kann.

Aus der EP-B-0 387 966 ist eine Einlage für Rohrschellen gemäß dem Oberbegriff von Anspruch 1, bekannt, die an ihrer dem Rohr zugewandten Seite glatt ausgebildet ist, und an der gegenüberliegenden Anlageseite zur Rohrschelle mit Rippen versehen ist. Die Rippen sind symmetrisch angeordnet und weisen im Mittenabschnitt der Einlage eine grössere Höhe auf als an den Rändern. Durch die gegenüber den üblicherweise verwendeten Einlagen umgekehrte Anordung der Rippen soll verhindert werden, dass das Rohr mit vorstehenden Rippen eine permanente Verbindung eingeht und nicht mehr relativ zur Rohrschelle bewegt werden kann. Im Fall eines weichen Materials, das gute Schalldämmeigenschaften aufweist, kann der Mittenbereich der Einlage bei Belastung durch ein auf der Einlage gelagertes Rohr abtauchen. Dabei werden die Seitenteile der Einlage, welche die Ränder der Rohrschelle umgreifen, einer Zugbelastung unterworfen. Bei einer Relativbewegung zwischen dem Rohr und der Rohrschelle durch Schieben oder Drehen des Rohres kann dann die Einlage von der Rohrschelle abgezogen werden und abfallen. Besteht die Einlage aus einem verformungssteifen Material, so verschlechtern sich die Schalldämmeigenschaften der Einlage.

Aufgabe der vorliegenden Erfindung ist es, diesen Nachteilen der bekannten Schallschutzeinlagen abzuhelfen. Es soll eine Einlage geschaffen werden, die gute Schalldämmeigenschaften aufweist und andererseits eine Relativbewegung zwischen dem Rohr und der Rohrschelle, beispielsweise bei der Montage oder als Folge einer thermischen Ausdehnung des Rohres, erlaubt, ohne dabei von der Rohrschelle abgezogen zu werden.

Die Lösung dieser teils widersprüchlichen Aufgaben besteht in einer Einlage für eine Rohrschelle mit den im kennzeichnenden Abschnitt des Anspruchs 1 angeführten Merkmalen. Insbesondere wird durch die Erfindung eine Einlage für eine Rohrschelle geschaffen, die ein Strangprofil aus einem schalldämmenden Material, vorzugsweise aus Gummi oder einem Elastomer, umfasst Das Strangprofil besitzt Seitenbereiche, die aufeinander zugebogen sind, so dass sie im montierten Zustand die Längsränder der Rohrschelle umgreifen, und einen Basisbereich, dessen Abstützfläche für ein zu lagerndes Rohr zu beiden Seiten eines erhabenen Mittenbereiches zu den Längsrändern hin abfällt. Die Abstützfläche der Einlage ist mit wenigstens einer Aussteifung, die im erhabenen Mittenbereich angeodnet ist, versehen. Die Aussteifung verläuft in Längsrichtung und ist gegen axiales Verkippen gesichert. Bei Druckbelastung ist die Aussteifung in einen Freiraum abtauchbar.

Indem die Abstützfläche für das Rohr eine oder mehrere Aussteifungen aufweist, wird verhindert, dass sich die Einlage beim Schieben oder Drehen des Rohres einrollt und dadurch von der Rohrschelle abgezogen wird. Im Fall einer thermischen Ausdehnung des Rohres verbessert die Aussteifung die Gleiteigenschaften der Einlage. Bei Druckbelastung ist die Aussteifung in einen Freiraum abtachbar, damit das gelagerte Rohr auf einer grösseren Abstütztfläche unterstützt wird. Dadurch wird der Druck je Flächeneinheit verringert, und die relative Verschiebbarkeit des Rohres und der Rohrschelle wird verbessert. Das Vorsehen eines Freiraumes, in den die Aussteifung bei Druckbelastung abtauchbar ist, gewährleistet, dass die Aussteifung nicht in Kontakt mit der Rohrschelle kommen kann und verhindert eine Beeinträchtigung des Schallschutzes durch die Bildung von Schallbrücken beim Komprimieren des Basisbereichs. Wegen der Aussteifung der Abstützfläche kann das Material der Einlage relativ weich sein. Vorzugsweise besteht die Einlage aus Gummi oder einem Elastomer. Somit wird das Schiebeverhalten der Einlage noch weiter verbessert. Der Querschnitt der Aussteifung kann dabei weitgehend beliebig gewählt werden. Zur Sicherung gegen axiales Verkippen wird die Aussteifung beispielsweise vollständig oder weitgehend in das Basismaterial eingebettet. Eine alternative Sicherung gegen Verkippen kann beispielsweise auch darin bestehen, die Höhe der Aussteifung geringer zu wählen als ihre Breite. Die Aussteifung bzw. die Aussteifungen können im Mittenbereich und/oder im Randbereich der Einalage vorgesehen sein.

Die Aussteifung besteht mit Vorteil aus einem steiferen Material als der Basisbereich. Als Werkstoff wird ein mit dem Basismaterial gut zu verbindender Werkstoff, beispielsweise ein thermoplastischer Werkstoff, gewählt Die Höhe der Aussteifung beträgt mit Vorteil etwa 1 mm bis etwa 1,5 mm.

In einer vorteilhaften Ausführungsvariante ist wenigstens eine Aussteifung im erhabenen Mittenbereich angeordnet. Vorzugsweise überragt sie dabei die Abstützfläche. Da steifere Materialien gegenüber dem gelagerten Rohr bessere Gleiteigenschaften aufweisen als das weichere Basismaterial, wird das Schiebeverhalten des Rohres noch weiter verbessert.

Um die Biegsamkeit der Einlage zu verbessern, ist die Aussteifung in einer insbesondere für Rohrschellen kleiner Durchmesser sehr vorteilhaften Ausführungsvariante in Längsrichtung segementiert ausgebildet. Die in Längsrichtung hintereinander angeordneten Segmente der Aussteifung behindern die Anpassung der Einlage an den Krümmungsradius der Rohrschelle nicht und erleichtern auch die Montage.

In einer Variante der Erfindung sind mehrer Aussteifungen angeordnet, die nebeneinander in Längsrichtung verlaufen. Dabei erweist es sich für die Verhinderung des axialen Kippens von Vorteil, wenn die Breite und die Höhe der Aussteifungen derart gewählt sind, dass die Summe der Breiten aller Aussteifungen gleich oder grösser ist als die Höhe einer Aussteifung.

Der Freifraum, in den die Aussteifung bei Druckbelastung abtauchbar ist, kann vom Material des Basisbereichs umschlossen sein. In einer alternativen Variante der Einlage ist der Freiraum im montierten Zustand der Einlage zwischen dem Rohrschellenbügel und der Rückseite der Einlage gebildet. Dabei kann die Rückseite der Einlage plan ausgebildet sein und der Freiraum durch eine oder mehrer Sicken im Rohrschellenbügel gebildet sein. In einer vorteilhaften Variante der Erfindung wird der Freiraum durch den Zwischenraum zwischen zwei symmetrisch zum Mittenbereich angeordneten Rippen an der Rückseite der Einlage gebildet. Bei Druckbelastung kann die Aussteifung in den Freiraum abtauchen. Die Längsrippen an der Rückseite der Einlage kippen aufeinander zu und stützen sich schliesslich gegenseitig ab. Dadurch ist gewährleistet, dass es selbst bei übermässig hoher Druckbelastung der Aussteifung zu keinem Kontakt mit dem Rohrschellenbügel kommt und wird eine Beeinträchtigung des Schallschutzes durch die Bildung von Schallbrücken beim Komprimieren des Basisbereichs verhindert.

Es erweist sich als vorteilhaft, wenn die Einlage für eine Rohrschelle an ihrer Abstützfläche für das Rohr eine sägezahnartige Profilierung besitzt, die zum Mittenbereich geöffnet ist, wobei die Materialdicke des Basisbereichs von der Aussteifung zu den Längsrändern hin abnimmt. Dabei ist die sägezahnartige Profilierung von Abschnitten der Anlagefläche gebildet, die miteinander vorzugsweise einen Winkel einschliessen, der ≥ 90° ist. Bedingt durch die langgezogene Sägezahnprofilierung in Einrollrichtung der Einlage wird beim Schieben des Rohres der Übergang von Haft- in Gleitreibung partiell herabgesetzt. Die Profildicke der Schallschutzeinlage nimmt von der Aussteifung aus von Sägezahn zu Sägezahn ab, damit die Anlagepunkte beim Verschieben des Rohres während der Montage nur zum Teil bzw. nacheinander mit dem zu lagernden Rohr in Eingriff kommen. Für den Herstellungsprozess und für die Montage ist es von Vorteil, wenn die Anlagefläche symmetrisch in Bezug auf den Mittenbereich ausgebildet ist. Dadurch können die Formen für die Herstellung des Strangprofils vereinfacht werden, und die Druckverhältnisse bei der Herstellung sind auf diese Weise leichter handzuhaben.

Die Längskanten der Einlage sind scharfkantig ausgebildet. Die scharfe Kante gewährleistet einen definierter Anlagebereich; sie liegt ausserhalb des Längsrandes des Rohrschellenbügels. Dadurch wird die beim Drehen oder Schieben des Rohres auf den Rand der Einlage wirkende Druckkraft vorwiegend auf die Längskante des Rohrschellenbügels übertragen. Dadurch erhöht sich die Haltekraft der Einlage auf dem Rohrschellenbügel und wir einem Einrollen beim Schieben oder Drehen eine grosser Widerstand entgegengesetzt.

Beim Drehen des Rohres ist es wichtig, dass das Rohr keine freie Kante des Basisbereichs der Einlage zu fassen bekommt und diese dadurch einrollt. Dies ist im allgemeinen bereits durch die zentrische Anordnung der Aussteifung sichergestellt. Indem der quer zu den Längsrändern verlaufende Endabschnitt des Strangprofils V-förmig zugeschnitten ist, wobei die das V bildenden Schenkel miteinander vorzugswweise einen Winkel von etwa 140° bis etwa 170° einschliessen und in einem stumpfen Winkel in den jeweiligen Längsrand einmünden, kann auch bei ungünstiger, verdrehter oder aussermittiger Montage der Rohrschelle oder schräger Führung des Rohres verhindert werden, dass das Rohr mit einem Endabschnitt in Berührung kommt. Dadurch wird die Bewegungsfreiheit des Rohres in der mit der Einlage versehenen Rohrschelle noch weiter verbessert, ohne befürchten zu müssen, dass die Einlage bei der Relativbewegung zwischen dem Rohr und der Rohrschelle von der Rohrschelle abgezogen wird.

Im folgenden wird die Erfindung anhand von Ausführungsbeispielen, unter Bezugnahme auf die Figuren näher erläutert. Es zeigen in zum Teil schematischer Darstellung:
- Fig. 1: ein erstes Ausführungsbeispiel einer auf eine Rohrschelle montierten erfindungsgemässen schalldämmenden Einlage im Querschnitt;
- Fig. 2: ein zweites Ausführungsbeispiel einer montierten erfindungsgemässen Rohrschelle im Querschnitt;
- Fig. 3: das in Fig. 2 mit III bezeichnete Detail in vergrössertem Massstab; und
- Fig. 4: eine Draufsicht eines Abschnittes eines erfindungsgemässen Profilstrangs.

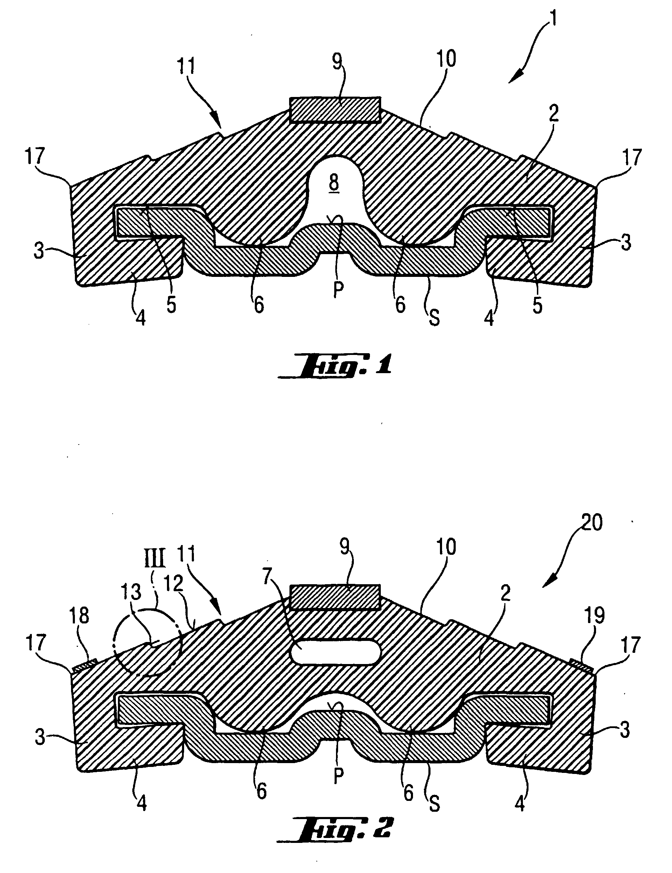

Fig. 1 zeigt einen Querschnitt eines erstes Ausführungsbeispiels der mit dem Bezugszeichen 1 versehenen erfindungsgemässen Einlage, die auf eine Rohrschelle S montiert ist. Bei der Rohrschelle handelt es sich beispielsweise um eine zweiteilige Konstruktion mit zwei halbkreisförmig gebogenen Schenkeln, deren freie Enden flanschartig abgebogen sind. Die einander gegenüberliegenden Flansche dienen der Verbindung und dem Zusammenspannen der beiden halbkreisförmigen Schenkel, beispielsweise durch Schrauben oder ähnliche zusammenwirkende Verbindungselemente. Die Rohrschelle S kann auch einteilig ausgebildet sein, indem ein Band aus Stahlblech kreisförmig gebogen und an seinen freien Enden verbindbar ist. Die Einlage 1 besitzt einen Basisbereich 2 und in Längsrichtung verlaufende Seitenbereiche 3, deren freie Enden 4 aufeinander zugebogen sind. Die abgebogenen freien Enden 4 der Seitenbereiche 3 umgreifen im montierten Zustand die Rohrschelle S an ihren Längsrändern. Der Basisbereich 2 weist an seiner im montierten Zustand der Rohrschelle S zugewandten Rückseite 5 in Längsrichtung verlaufenden Rippen 6 auf, die die Rückseite 5 überragen und sich in nutenartigen Profilierungen P in der Rohrschelle S abstützen. Die nutenartigen Profilierungen P verlaufen in Umfangsrichtung der Rohrschelle S und verleihen dem üblicherweise aus Stahlblech bestehenden Band die erforderliche mechanische Festigkeit. Zudem dienen die nutenartigen Profilierungen P als Montagehilfe und seitliche Führung für die Einlage 1. Die von der Rohrschelle S abgewandte Seite der Einlage 1 bildet eine Abstützfläche 10 für ein zu lagerndes Rohr. Die Abstützfläche 10 weist einen erhabenen Mittenbereich auf und fällt zu beiden Seiten zu den Längsrändern 17 der Einlage 1 hin ab. Die Abstützfläche 10 ist sägezahnartig profiliert, wobei die Profilierungen 11 in Richtung des Mittenbereichs geöffnet sind. Die Materialdicke des Basisbereichs 2 nimmt vom erhabenen Mittenbereich zu den Längsrändern 17 hin ab. Die Längsränder 17 liegen seitlich möglichst weit ausserhalb der Längsränder der Rohrschelle S und sind scharfkantig ausgebildet.

Im erhabenen Mittenbereich ist eine Aussteifung 9 angeordnet, die in Längsrichtung verläuft und eine Breite aufweist, die grösser ist als ihre Höhe. Die Aussteifung 9 ist aus einem biegesteiferen, härteren Material als der Basisbereich 2. Gemäss dem dargestellten Ausführungsbeispiel überragt die Aussteifung 9 die Abstützfläche 10. Dies ist jedoch nicht zwingend erforderlich. Die Aussteifung 9 könnte auch unterhalb des Mittenbereichs in das weichere Material des Basisbereichs 2 eingebettet und vollständig davon umgeben sein. Unterhalb der Aussteifung 9 ist an der Rückseite 5 der Einlage 1 ein Freiraum vorgesehen, der von dem Zwischenraum 8 zwischen den Rippen 6 gebildet ist. Der Freiraum erlaubt es der Aussteifung 9, bei Druckbelastung durch das Gewicht des Rohres in den Basisbereich 2 abzutauchen. Dabei verengt sich der Zwischenraum 8, bis sich im Extremfall die einander zugewandten Längsseiten der Rippen 6 berühren und einem weiteren Abtauchen der Versteifung 9 entgegenwirken. Auf diese Weise ist gewährleistet, dass keine Schallbrücke entstehen kann.

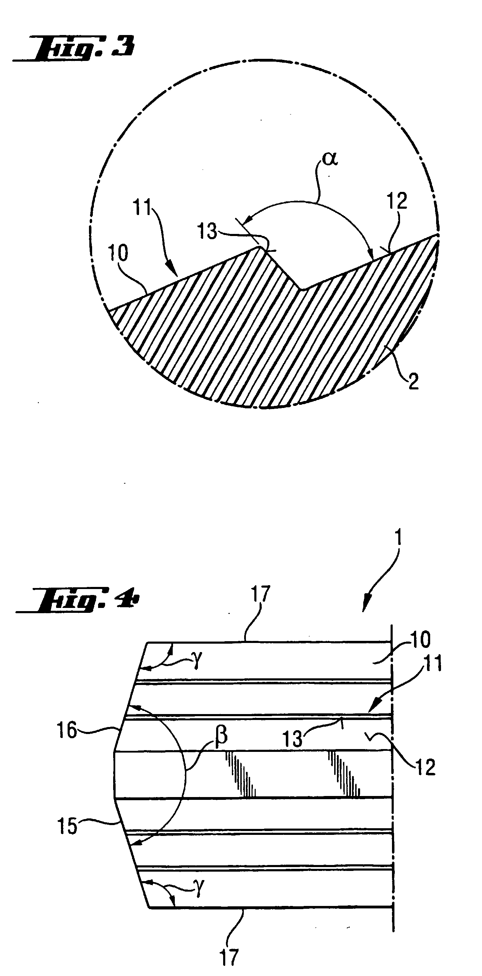

Das in Fig. 2 dargestellte zweite Ausführungsbeispiel der erfindungsgemässen Einlage 20 entspricht weitgehend dem Ausführungsbeispiel aus Fig. 1. Der Unterschied liegt in der Anordnung des Freiraums 7, der in das Material des Basisbereichs 2 eingebettet ist und vollständig davon umschlossen ist. Wie in der Fig. 2 angedeutet, können im Bereich der Längsränder 17 weitere Aussteifungen 18, 19 vorgesehen sein, deren Breite grösser ist als ihre Höhe. Diese zusätzlichen Aussteifungen 18, 19 entlang der Längsränder 17 bestehen aus dem gleichen Material wie die Aussteifung 9 im Mittenbereich. Die sägezahnartige Profilierung 11 der Abstützfläche 10 ist in Fig. 2 als Detail III eingekreist und in Fig. 3 in vergrössertem Massstab dargestellt. Aus Fig. 3 ist ersichtlich, dass die Abschnitte 12, 13 der Abstützfläche miteinander einen Winkel α einschliessen, der ≥ 90° beträgt. Die Sägezahnhöhe beträgt etwa 10% bis 20% der geringsten Materialstärke des Basisbereichs 2.

Fig. 4 zeigt eine vorteilhafte Variante der Gestaltung des Endbereichs der Einlage 1, die üblicherweise durch ein Strangprofil aus Gummi oder einem biegeelastischen Elastomer gebildet ist. Die freien Enden sind V-förmig zugeschnitten. Dabei schliessen die das V bildenden Schenkel 15, 16 der Breitseite des Strangprofils miteinander einen Winkel β ein, der von etwa 140° bis etwa 170° beträgt. Die Schenkel 15, 16 münden jeweils unter einem stumpfen Winkel γ in die Längsränder 17 des Strangprofils ein. In der in Fig. 4 gewählten Draufsicht ist die sägezahnartige Profilierung 11 der Abstützfläche 10 ersichtlich. Die den Mittenbereich überragende Aussteifung 9 ist ebenfalls ersichtlich.

Die erfindungsgemässe Ausbildung der Einlage gewährleistet die gewünschte Schalldämmung und erlaubt gleichzeitig eine Relativbewegung zwischen der mit der Einlage versehenen Rohrschelle und dem davon gehaltenen Rohr, beispielsweise bei der Montage oder infolge einer thermischen Ausdehnung des Rohres, ohne dass die Einlage von der Rohrschelle abgezogen wird.

## Patentansprüche

1. Einlage für eine Rohrschelle (S) umfassend ein Strangprofil aus einem schalldämmenden Material, vorzugsweise aus Gummi oder einem Elastomer, mit Seitenbereichen (3), deren Enden (4) aufeinander zugebogen sind, dass sie im montierten Zustand die Längsränder der Rohrschelle (S) umgreifen, und einem Basisbereich (2) mit einer Abstützfläche (10) für ein zu lagerndes Rohr, die zu beiden Seiten eines erhabenen Mittenbereichs zu den Längsrändern (17) hin abfällt, **dadurch gekennzeichnet**, dass die Abstützfläche (10) mit wenigstens einer Aussteifung (9), die im erhabenen Mittenbereich angeordnet ist, ausgestattet ist, die in Längsrichtung verläuft und gegen axiales Verkippen gesichert ist und bei Druckbelastung in einen Freiraum (7, 8) abtauchbar ist.

2. Einlage nach Anspruch 1, dadurch gekennzeichnet, dass die Aussteifung (9) aus einem härteren Material besteht als der Basisbereich (2).

3. Einlage nach Anspruch 1 oder 2, dadurch gekennzeichnet, dass die Aussteifung (9) die Abstützfläche (10) überragt oder unterhalb des Mittenbereiches in das Material des Basisbereichs (2) eingebettet ist.

4. Einlage nach einem der vorangehenden Ansprüche, dadurch gekennzeichnet, dass die Aussteifung (9) in Längsrichtung segmentiert ausgebildet ist.

5. Einlage nach einem der vorangehenden Ansprüche, dadurch gekennzeichnet, dass mehr als eine Aussteifung (9) vorgesehen sind, deren Breite und Höhe derart bemessen sind, dass die Summe der Breiten aller Aussteifungen (9) gleich oder grösser ist als die Höhe der Aussteifung (9).

6. Einlage nach einem der vorangehenden Ansprüche, dadurch gekennzeichnet, dass der Freiraum (7) vom Material des Basisbereiches (2) umschlossen ist.

7. Einlage nach einem der vorangehenden Ansprüche, dadurch gekennzeichnet, dass der Freiraum (8) durch den Zwischenraum zwischen zwei symmetrisch zum Mittenbereich angeordneten Längsrippen (6) an der Rückseite (5) des Basisbereiches (2) gebildet ist.

8. Einlage nach einem der vorangehenden Ansprüche, dadurch gekennzeichnet, dass die Abstützfläche (10) eine sägezahnartige Profilierung (11) aufweist, die zum Mittenbereich geöffnet ist, wobei die Materialdicke des Basisbereichs (2) von der Aussteifung (9) zu den Längsrändern (17) hin abnimmt.

9. Einlage nach Anspruch 8, dadurch gekennzeichnet, dass die sägezahnartige Profilierung (11) von Abschnitten (13, 12) der Anlagefläche (10) gebildet wird, die miteinander einen Winkel (α) einschliessen, der ≥ 90° ist.

10. Einlage nach einem der vorangehenden Ansprüche, dadurch gekennzeichnet, dass ihre Längsränder (17) scharfkantig ausgebildet sind.

11. Einlage nach einem der vorangehenden Ansprüche, dadurch gekennzeichnet, dass die quer zu den Längsrändern (17) verlaufende Endabschnitt des Strangprofils V-förmig zugeschnitten ist, wobei die das V bildenden Schenkel (15, 16) miteinander einen Winkel (β) von etwa 140° bis etwa 170° einschliessen und in einem stumpfen Winkel (γ) in den jeweiligen Längsrand (17) einmünden.

## Claims

1. Insert for a pipe clamp (S), comprising an extruded profile of a sound-absorbing material, preferably rubber or an elastomer, with side areas (3) the ends (4) of which are bent towards each other so that they reach in the assembled state around the longitudinal edges of the pipe clamp (S), and a base area (2) with a support surface (10) for a pipe to be seated which drops on both sides of a proud central area towards the longitudinal edges (17), **characterised in that** the support surface (10) is equipped with at least one stiffener (9), which is arranged in the proud central area and extends in the longitudinal direction and is secured against axial tipping and can be lowered into a free area (7, 8) when under a pressure load.

2. Insert according to Claim 1, **characterised in that** the stiffener (9) is composed of a material which is harder than the base area (2).

3. Insert according to Claim 1 or 2, **characterised in that** the stiffener (9) protrudes over the support surface (10) or is embedded below the central area into the material of the base area (2).

4. Insert according to one of the above claims, **characterised in that** the stiffener (9) is designed to be segmented in the longitudinal direction.

5. Insert according to one of the above claims, **characterised in that** more than one stiffener (9) is provided, the width of height of which is dimensioned in such a manner that the sum of the width of all stiffeners (9) is equal or greater than the height of the stiffener (9).

6. Insert according to one of the above claims, **characterised in that** the free area (7) is encased by the material of the base area (2).

7. Insert according to one of the above claims, **characterised in that** the free area (8) is formed by the intermediate space between two longitudinal webs (6), which are arranged symmetrically relative to the central area, at the rear (5) of the base area (2).

8. Insert according to one of the above claims, **characterised in that** the support surface (10) comprises a sawtooth like profile (11) which is opened towards the central area, and the material thickness of the base area (2) reduces from the stiffener (9) towards the longitudinal edges (17).

9. Insert according to Claim 8, **characterised in that** the sawtooth like profile (11) is formed by sections (13, 12) of the abutment surface (10) which include an angle (a) which is ≥ 90°.

10. Insert according to one of the above claims, **characterised in** **that** their longitudinal edges (17) are designed to be sharp-edged.

11. Insert according to one of the above claims, **characterised in that** the end section of the extruded profile which extends transversely to the longitudinal edges (17) is V-shaped, and the shanks which form the V (15, 16) include an angle (b) of between approximately 140° and approximately 170° and terminate in an obtuse angle (g) in the respective longitudinal edge (17).

## Revendications

1. Garniture pour un collier pour tube (S), comprenant un profilé extrudé en matière insonore, de préférence en caoutchouc ou en un élastomère, avec des zones latérales (3) dont les extrémités (4) sont repliées l'une vers l'autre de façon à enserrer, une fois montées, les bords longitudinaux du collier pour tube (S), et avec une zone de base (2) avec une surface d'appui (10) pour un tube à supporter, laquelle descend en direction des bords longitudinaux (17) de part et d'autre d'une zone centrale proéminente, caractérisée en ce que la surface d'appui (10) est pourvue d'au moins un moyen de renfort (9), lequel est disposé dans la zone centrale proéminente, s'étend dans la direction longitudinale et est immobilisé contre tout basculement axial et lequel peut, en présence d'une contrainte de compression, s'enfoncer dans un espace libre (7, 8).

2. Garniture selon la revendication 1, caractérisée en ce que le moyen de renfort (9) est réalisé dans une matière plus dure que celle de la zone de base (2).

3. Garniture selon la revendication 1 ou 2, caractérisée en ce que le moyen de renfort (9) dépasse de la surface d'appui (10) ou est encastré dans la matière de la zone de base (2) au-dessous de la zone centrale.

4. Garniture selon une des revendications précédentes, caractérisée en ce que le moyen de renfort (9) est conçu sous forme segmentée dans la direction longitudinale.

5. Garniture selon une des revendications précédentes, caractérisée en ce qu'il est prévu plus d'un moyen de renfort (9) dont la largeur et la hauteur sont calculées pour que la somme des largeurs de tous les moyens de renfort (9) soit égale ou supérieure à la hauteur du moyen de renfort (9).

6. Garniture selon une des revendications précédentes, caractérisée en ce que l'espace libre (7) est entouré par de la matière de la zone de base (2).

7. Garniture selon une des revendications précédentes, caractérisée en ce que l'espace libre (8) est formé par l'intervalle compris entre deux nervures longitudinales (6) disposées symétriquement par rapport à la zone centrale et situées sur la face arrière (5) de la zone de base (2).

8. Garniture selon une des revendications précédentes, caractérisée en ce que la surface d'appui (10) présente un profilage en dents de scie (11) qui est ouvert vers la zone centrale, l'épaisseur de matière de la zone de base (2) décroissant du moyen de renfort (9) vers les bords longitudinaux (17).

9. Garniture selon la revendication 8, caractérisée en ce que le profilage en dents de scie (11) est formé par des portions (13, 12) de la surface d'appui (10), lesquelles forment entre elles un angle (α) qui est ≥ 90°.

10. Garniture selon une des revendications précédentes, caractérisée en ce que ses bords longitudinaux (17) sont à arêtes vives.

11. Garniture selon une des revendications précédentes, caractérisée en ce que la portion extrême du profilé extrudé, laquelle s'étend transversalement aux bords longitudinaux (17), est découpée en forme de V, les rives (15, 16) qui constituent le V formant entre elles un angle (β) d'environ 140° à environ 170° et rejoignant leur bord longitudinal respectif (17) en formant un angle obtus (γ).
